# NEUE EUROPÄISCHE PATENTSCHRIFT

(11) **EP 1 118 220 B2**
(45) Veröffentlichungstag und Bekanntmachung des Hinweises auf die Entscheidung über den Einspruch: **02.11.2005**
(45) Hinweis auf die Patenterteilung: 03.07.2002
(21) Anmeldenummer: 99955769.7
(22) Anmeldetag: 22.09.1999
(51) Int. Cl.: H04N 7/088, H04N 5/445

(54) **VERFAHREN UND VORRICHTUNG ZUR AUSWAHL UND SPEICHERUNG VON BEVORZUGTEN TELETEXTSEITENNUMMERN**
METHOD AND DEVICE FOR SELECTING AND STORING PREFERRED TELETEXT NUMBERS
PROCEDE ET DISPOSITIF POUR SELECTIONNER ET MEMORISER DES NUMEROS PREFERENTIELS DE PAGES DE TELETEXTE

(30) Priorität: 29.09.1998 DE 19844697
(43) Veröffentlichungstag der Anmeldung: 25.07.2001
(73) Patentinhaber: Micronas GmbH, 79108 Freiburg (DE)
(72) Erfinder: HÖCK, Günter, D-83673 Bichl (DE); SCHWARZ, Ronald, D-81547 München (DE)
(74) Vertreter: Bickel, Michael
(86) Internationale Anmeldenummer: PCT/DE1999/003036
(87) Internationale Veröffentlichungsnummer: WO 2000/019721

(56) Entgegenhaltungen:
- EP-A- 0 145 677
- EP-A- 0 629 088
- EP-A- 0 668 699
- EP-A- 0 675 650
- US-A- 4 701 794
- WILDHAGEN U: "Teletext-multi-page system with the TPU 2700" ELEKTRONIK, 14 JUNE 1985, WEST GERMANY, Bd. 34, Nr. 12, Seiten 163-168, XP002131813 ISSN: 0013-5658
- FUNKSCHAU 3/1988, Seiten 46-49, G. EITZ et al.: "DIE NÄCHSTE STUFE"

## Beschreibung

Die Erfindung betrifft ein Verfahren zur Auswahl und Abspeicherung von bevorzugten Teletextseitennummern gemäß den Merkmalen des Obergriffs des Anspruchs 1 und eine Vorrichtung gemäß den Merkmalen des Oberbegriffs des Anspruchs 7.

Fernsehgeräte und Videorecorder enthalten heutzutage häufig Teletextdecoder zum Emfang von Teletextsignalen. Diese Teletextsignale werden in der Austastlücke des Fernsehsignals übertragen und können von Bedienpersonen am Bildschirm durch geeignete Tastenbetätigung individuell abgerufen werden. Die Teletextinformation wird in Form von Teletextseiten am Bildschirm dargestellt. Der Empfang von Teletextseiten unterliegt in der Bereitstellungszeit der Seiteninhalte unterschiedlichen Abhängigkeiten. So ist eine normale Seite innerhalb der Zykluszeit des Seitenzykluses dargestellt. Eine Sub-Seite erscheint seltener, nämlich die Anzahl der Sub-Seiten multipliziert mit der Zykluszeit des Seitenzykluses. Wiederholungsseiten sind von der Anzahl der Übertragungen pro Seitenzyklus abhängig. Die Bereitstellungszeit der Seiteninhalte hängt darüber hinaus von der Seitenspeicherkapazität des Teletext-Empfängers ab. Schließlich ist die Bereitstellungszeit auch von der Fähigkeit des Teletextdecoders abhängig, in Echtzeit unmittelbar aufeinander Seiten sofort abzuspeichern.

Die Teletextdecoder in TV-Geräten arbeiten mittlerweile mit Seitenspeicherkapazitäten zwischen 1 und ca. 500 Seiten.

Unter Berücksichtigung der oben erwähnten Bereitstellungszeiten gelingt es entsprechend der Seitenspeicherkapazität innerhalb eines Seitenzykluses unterschiedlich viele normale Seiten und Sub-Seiten abzuspeichern.

Problematisch bei den bekannten Teletextdecodern ist die Tatsache, dass für den Benutzer von ihm bevorzugte Seiten nur unbefriedigend schnell ausgewählt und abgespeichert werden können. Die eine Bedienperson am meisten interessierenden Teletextseiten werden auch "favorite pages" genannt. Prinzipiell erfolgt die Auswahl der darzustellenden Teletextseiten durch eine Seitenanforderung (page request) der Bedienperson. Hierin können auch die favorite pages enthalten sein. Die Festlegung solcher favorite pages geschieht in der Regel durch die Bedienperson, zum Beispiel mit der Fernbedienung des Fernsehgerätes.

Die Auswahl und Abspeicherung solcher bevorzugten Teletextseitennummern bzw. Teletextseiten wird bisher durch umständliche Tastenbetätigungen auf der Fernbedienung aktiviert. Mit Cursortasten erfolgt hierbei die Selektion eines Eingabefeldes für die Ziffern der Teletextseitennummern, also Hunderter, Zehner, Einer, Sub-Code, Stundenzehner, Stundeneiner, Minutenzehner und Minuteneiner. Nach Eingabe der erforderlichen Ziffern muss die Bedienperson durch eine Eingabeschlusstaste diese Eingabe der von ihm favorisierten Teletextseitennummern inklusive eventueller Sub-Code-Nummern bestätigen und schließlich abschließen. Dieser Vorgang wiederholt sich entsprechend der Anzahl der von der Bedienperson gewünschten favorite pages. Bei den heute bekannten Teletextdecodern ist insbesondere aufgrund des zur Anzeige der favorite pages-Seitennummern bereitzustellenden Platzes auf dem Bildschirm lediglich die Möglichkeit gegeben, maximal vierfavorite pages-Seitennummern zur Auswahl am Display anzubieten.

Aus der EP-A-O 145 677 ist ein Verfahren zur Auswahl und Abspeicherung von bevorzugten Teletextseitennummern bekannt, bei welchem die zu abzuspeichernden Teletextseiten gehörenden Teletextseitennummern durch eine einmalige Tastenbetätigung in einer Liste von bevorzugten Teletextseitennummern gespeichert werden.

Wildhagen U.: "Teletext-Multipage System with the TPU 2700", Elektronik, 14. Juni 1985, Bundesrepublik Deutschland, Band 34, Nr. 12, Seiten 163 bis 168, beschreibt ein Verfahren zur Auswahl und Abspeicherung von bevorzugten Teletextseitennummern, das eine optische Menüführung verwendet. Eine Abspeicherung von bevorzugten Teletextseiten findet bei diesem Verfahren allerdings nicht statt, Zusatzinformationen zu den Teletextseiten werden ebenfalls nicht angezeigt.

Es soll ein Verfahren und eine Vorrichtung angegeben werden, mit der die von einer Bedienperson individuell festlegbaren, bevorzugten Teletextseitennummern in einfacher, übersichtlicher und schneller Weise auswählbar und speicherbar sind. Die Erfindung hat damit das Ziel, eine auch von der Bedienperson als angenehm zu empfindende Auswahl der die Bedienperson am meisten interessierenden Teletextseiten durchzuführen.

Diese Aufgabe wird für das Verfahren durch die Merkmale des Anspruchs 1 und für die Vorrichtung durch die Merkmale des Anspruchs 6 gelöst.

Die Erfindung beruht also im Wesentlichen darauf, dass eine als bevorzugt klassifizierte Teletextseite zunächst von der Bedienperson aufgerufen wird, um am Bildschirm angezeigt zu werden. Anschließend wird die zu dieser aktuell dargestellten Teletextseite gehörende Seitennummer durch einmalige Tastenbetätigung in einer Liste von bevorzugten Seitennummern abgespeichert. Sofern mehrere als bevorzugt klassifizierte Teletextseiten von der Bedienperson zukünftig gesehen werden wollen, müssen die genannten beiden Schritte durch Aufrufen der zugehörenden Teletextseitennummern wiederholt werden.

Besonders elegant läßt sich hierbei eine optische Menueführung realisieren, wobei die bevorzugten Seitennummern in einem Anzeigefeld, das der eingeblendeten aktuellen Teletextseite überlagert ist, dargestellt wird.

Zusätzlich zu den favorisierten Teletextseitennummern können Zusatzinformationen auf dem Anzeigefeld dargestellt werden. Diese Zusatzinformationen können durch Markieren einerin ihrerZeichenlängevorgegebenen Zeichenkette auf der angezeigten Teletextseite in das Anzeigenfeld übernommen werden.

Wichtig bei der Einblendung des Anzeigefeldes über einer aktuell dargestellten Teletextseite ist, dass zumindest die Kopfzeile (Header) und die Fußzeile der aktuell dargestellten Teletextseite nicht überdeckt wird. Dies ist deshalb notwendig, um beim Aufrufen einer weiteren Teletextseite, die favorisiert werden soll, zu verhindern, dass die Kopfzeile mit der dort dargestellten Seitennummer überdeckt wird.

Zweckmäßigerweise wird das Anzeigefeld (Browserfenster) durch Tastenbetätigung ein- und ausblendbar gestaltet.

In einer bevorzugten Weiterbildung der Erfindung kann das Anzeigefeld einen sogenannten Listmodus, der ein- und ausschaltbar ist, beinhalten. Die Funktion des Listmodus besteht darin, die Teletextseiten wie im normalen Teletextmodus anwählen zu können. Dies bedeutet, dass eine anzufordernde Teletextseite durch Zifferneingabe, page +/- oder durch Tabtasteneingabe angefordert wird. Diese Teletextseite erscheint dann hinter dem Anzeigefeld. Der Benutzer kann sich so über den Teletext-Seiteninhalt orientieren oder durch Ausblendung des Anzeigefeldes den gesamten Seiteninhalt der Teletextseite sehen.

Im Anzeigefeld werden die Teletext-Seitennummern mit einer mnemonischen Zusatzinformation (z. B. Titel) dargestellt. Durch Positionieren einer Einfügemarke (Cursor) im Anzeigefeld wird die Stelle eines neuen Seitennummerneintrages festgelegt. Der Seitennummerneintrag geschieht nun einfach durch Drücken einer dieser Funktion zugeordneten Seitennummernübernahmetaste, wobei die Seitennummer diejenige der im Teletextfenster angezeigten Seite ist. Dieses Verfahren kann auf Normal- und Sub-Seiten angewandt werden.

Die mnemonische Zusatzinformation wird durch Markierung einer beliebigen in der Zeichenlänge begrenzten Zeichenkette im Teletextmodus festgelegt. Diese wird mit Betätigung der Seitennummernübemahmetaste in das aktuelle Anzeigefeld übernommen. Editierfunktionen, wie zum Beispiel Sortieren, Suchen, Löschen, Scrollen, ..., können im Anzeigefeld auf die Felder und deren Inhalte softwaregesteuert angewandt werden. Eine bevorzugte Teletextseite kann dann durch Markierung der im Anzeigefeld dargestellten Seitennummer mittels Cursor und anschließender Betätigung einer Taste am Bildschirm dargestellt werden.

Die Erfindung wird nachfolgend in Zusammenhang mit drei Figuren näher erläutert. Es zeigen:
- Fig. 1: Das Blockschaltbild eines bekannten Teletextdecoders der Baureihe SDA525x der Anmelderin erweitert um einen nichtflüchtigen Speicher,
- Fig. 2: beispielhaft die Gestaltung eines Anzeigefeldes zur optischen Darstellung von favorisierten Teletextseitennummern und zugehörender Zusatzinformation auf einem Bildschirm, und
- Fig. 3: ein Beispiel einer Bildschirmdarstellung bei Anwendung des erfindungsgemäßen Verfahrens.

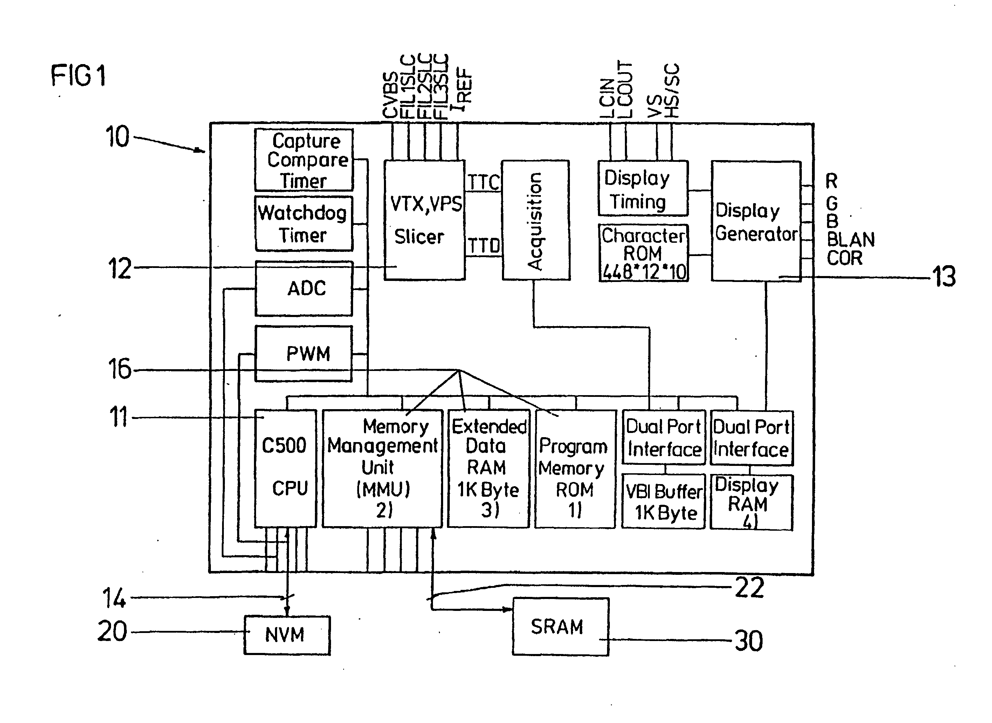

In Fig. 1 ist das Blockschaltbild eines integrierten Teletextdecoder-Bausteins 10 gezeigt. Dieser Teletextdecoder-Baustein kann zum Beispiel der integrierte Schaltkreis der MEGA-TEXT-Familie SDA5273 bzw. SDA5275 oder der TVTEXT-Familie SDA525x sein. Sämtliche dieser integrierten Schaltkreise stammen von der Anmelderin. Der konkret in Fig. 1 dargestellte integrierte Teletextdecoder-Baustein 10 entspricht dem Blockschaltbild des integrierten Schaltkreises SDA5250. Der Aufbau und die Funktionsweise dieses Teletextdecoder-Bausteins 10 ist in den bereits veröffentlichten Datenblättern und Usermanuals der Anmelderin detailliert beschrieben, so dass vorliegend auf den Aufbau und die Funktionsweise dieses bekannten Teletextdecoder-Bausteins 10 nicht näher eingegangen zu werden braucht.

Bestandteile des bekannten Teletextdecoder-Bausteins 10 sind ein VTX/VPS-Slicer 12, der die Teletextsignale aus dem Videosignal abtrennt. Eine zentrale Steuereinrichtung 11 (CPU) sorgt für die zeitrichtige Verarbeitung dieser abgetrennten Teletextsignale. Die Steuereinrichtung 11 ist hierfür mit verschiedenen Speichereinheiten 16 in Verbindung. Die von der Steuereinrichtung 11 verarbeiteten Teletextsignale gelangen schließlich über einen Displaygenerator 13 an den Ausgang des Teletextdecoder-Bausteins 10, um an einem Bildschirm eines Fernsehgerätes dargestellt zu werden.

Erfindungsgemäß ist die Steuereinrichtung 11 des an sich bekannten Teletextdecoder-Bausteins 10 über Verbindungsleitungen 14 mit einem nichtflüchtigen Speicher 20 in Verbindung. In diesem nichtflüchtigen Speicher 20 werden erfindungsgemäß Teletextseitennummern für von einer Bedienperson bevorzugte Teletextseitennummern und fakultativ zugehörende Zusatzinformationen abgespeichert. Der nichtflüchtige Speicher 20 hat den Vorteil, dass auch beim Ausschalten des Fernsehgerätes oder Videorecorders die von der Bedienperson zuvor eingegebenen bevorzugten Teletextseitennummern und gegebenenfalls Zusatzinformationen nach einem Einschalten des Fernsehgerätes wieder zur Verfügung stehen. Die Verbindungsleitungen 14 sind beispielsweise durch einen I²C-Bus an die zentrale Steuereinrichtung 11 des Teletextdecoder-Bausteins 10 angeschlossen. Zusätzlich weist der Teletextdecoder-Baustein 10 einen SRAM 30 auf, der über Verbindungsleitungen 22 an die Speichereinrichtung 16 des Teletextdecoder-Baustein 10 angeschlossen ist. Dieser SRAM 30 dient zur Speicherung einer Vielzahl (z. B. 100) Teletextseiten und enthält die Teletextseitenadressen. In dem SRAM 30 sind die empfangenen Teletext-Seitenadressen abgelegt. Auf diese wird zugegriffen, wenn die Benutzereingabe zur Übernahme bevorzugten Teletextseitennummern gegeben wird.

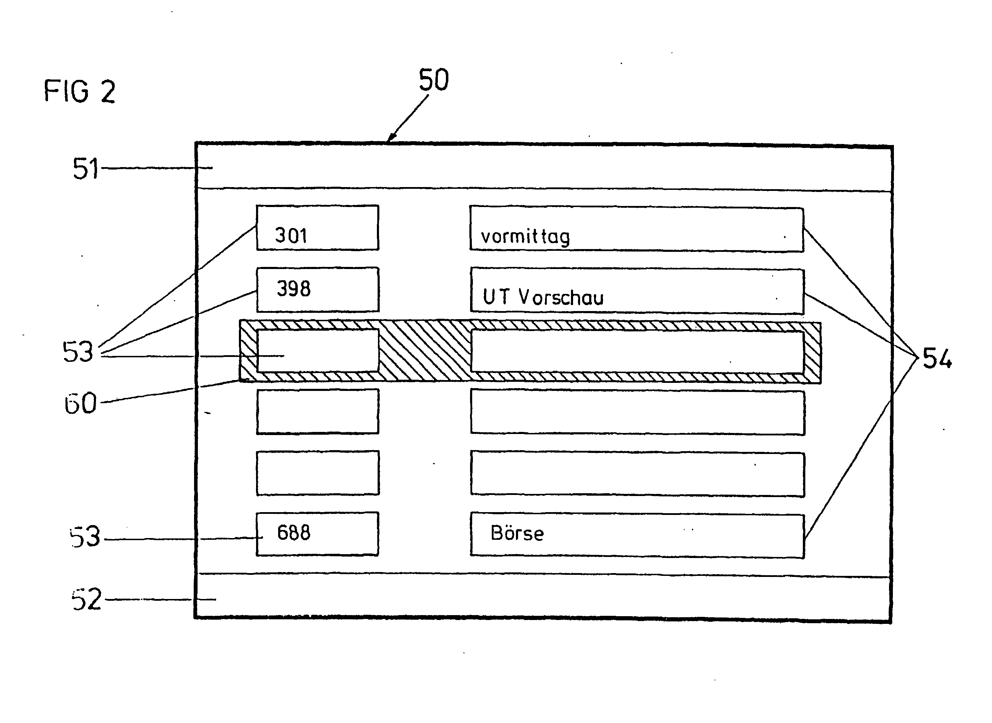

In Fig. 2 ist ein Beispiel für ein Anzeigefeld 50 (=Browser-Fenster) für ein menuegesteuertes Verfahren zur Auswahl und Abspeicherung von bevorzugten Teletextseitennummern, wie es die Erfindung vorschlägt, dargestellt. Das Anzeigefeld 50 weist eine Kopfzeile 51 und eine Fußzeile 52 auf. Dazwischen ist eine Liste von bevorzugten Teletextseitennummern 53 eingefügt. Diese bevorzugten Teletextseitennummern 53 werden von der Bedienperson in noch zu erläuternder Art und Weise in das Anzeigefeld 50 eingetragen. Rechts neben den bevorzugten Teletextseitennummern 53 kann eine Zusatzinformation 54 angezeigt werden. Damit ist zu jeder bevorzugten Teletextseitennummer 53 eine Kurzinformation angezeigt, die die Bedienperson stichwortartig über den Inhalt der zu der bevorzugten Teletextseitennummer 53 gehörenden Teletextseite in-formiert. So sieht der Betrachter des Anzeigefeldes 50 beispielsweise, dass zu der bevorzugten Teletextseitennummer 688 eine Teletextseite gehört, die Börseninformationen anzeigt. Um die zugehörende Teletextseite einer bevorzugten Teletextseitennummer 53 auszuwählen, ist im Anzeigefeld 50 ein Cursor 60, der hier balkenförmig ausgebildet ist, vorgesehen. Dieser Cursor 60 ist vertikal im Anzeigefeld 50 von einer Zeile zur anderen verfahrbar. Steht der Cursor 60 über einer bevorzugten Teletextseitennummer, so wird diese im Vergleich zu den übrigen Teletextseitennummern beispielsweise andersfarbig dargestellt. Betätigt die Bedienperson dann eine auf der Fernbedienung des Fernsehgerätes vorhandene Taste, wird die vom Cursor 60 markierte bevorzugte Teletextseitennummer ausgewählt und die entsprechene Teletextseite im nächsten Schritt am Bildschirm dargestellt.

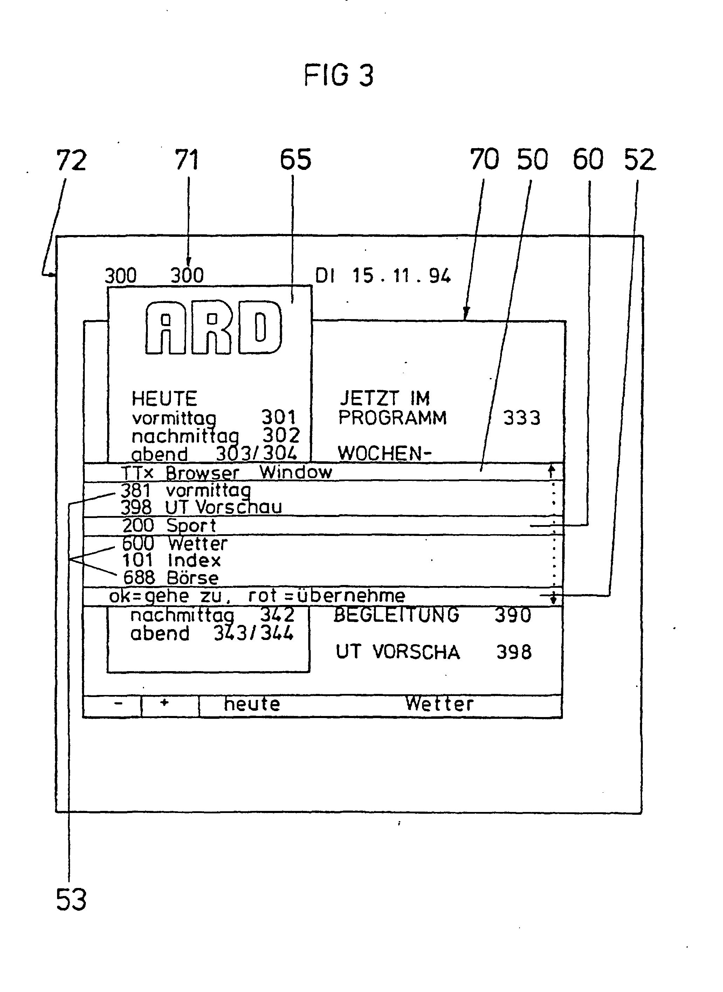

In Fig. 3 ist der Bildschirm eines Fernsehgerätes beispielhaft dargestellt, auf dem eine Teletextseite 700 komplett dargestellt ist. In der Kopfzeile 72 dieser Teletextseite 70 ist die zugehörende Teletextseitennummer 71 (hier die Teletextseitennummer 300) eingeblendet. Über dieser Teletextseite 70 ist das in Zusammenhang mit Fig. 2 bereits beschriebene Anzeigefeld 50 eingeblendet. Die Kopfzeile 51 des Anzeigefeldes 50 trägt den Text "TTx-Browser-Window". Als bevorzugte Teletextseitennummern 53 sind die Teletextseitennummern 301, 398, 200, 600, 101 und 688 eingeblendet. Jede dieser bevorzugten Teletextseitennummem 53 ist mit einer Zusatzinformation versehen. Die Fußzeile 52 des Anzeigenfeldes 50 ist mit dem Text "ok = gehe zu, rot = übernehme" versehen. Der balkenmäßig gestaltete Cursor 60 steht auf der Zeile, in der die bevorzugte Teletextseitennummer 200 mit der Zusatzinformation "Sport" eingeblendet ist. Zusätzlich ist auf dem Bildschirm erkennbar, dass die linke Hälfte markiert ist. Diese Markierung der Teletextseite 70 kann als Mnemonik-Eintrag für die Zusatzinformation im Anzeigefeld 50 herangezogen werden.

Die Funktionsweise zum Auwählen und Abspeichern der bevorzugten Teletextseitennummern ist nun Folgende:

Die Bedienperson drückt auf der Fernbedienung zunächst in herkömmlicher Art und Weise eine Ziffernkombination, zum Beispiel die Ziffern 300, um die hierzu gehörende Teletextseite abzurufen. Die Teletextseite 300 wird am Bildschirm dargestellt. Will die Bedienperson diese Teletextseite zukünftig als bevorzugte Teletextseite aufrufen, also schneller aufrufen, so blendet er mit einer hierfür vorgesehenen Taste an der Fernbedienung das Anzeigefeld 50 ein, sofern dieses noch nicht am Bildschirm eingeblendet ist. Bei dem eingeblendeten Anzeigefeld 50 kann die Bedienperson vorzugsweise noch über eine weitere Taste an der Fernbedienung entscheiden, ob die Liste von bereits gespeicherten bevorzugten Teletextseitennummern angezeigt werden soll oder nicht. Die aufgerufene Teletextseite 300 befindet sich nach dem Einblenden des Anzeigefeldes 50 hinter diesem, wie in Fig. 3 dargestellt. Durch Positionieren einer Einfügemarke, z. B. des balkenförmigen Cursors im Anzeigefeld, wird die Stelle eines neuen Teletextseitennummerneintrages festgelegt. Der Eintrag der Teletextseitennummer geschieht dann einfach durch Drücken einer dieser Funktion zugeordneten Taste an der Fembedienung. Ist die Taste gedrückt, wird in das entsprechende Feld des Anzeigefeldes 50 die Teletextseitennummer 300 eingeblendet.

Sofern eine mnemonische Zusatzinformation neben der bevorzugten Teletextseitennummer angezeigt werden soll, kann diese durch Markierung einer beliebigen in der Zeichenlänge begrenzten Zeichenkette im Teletextmodus festgelegt werden. Diese wird mit Betätigung der Seitennummernübernahmetaste in das aktuelle Anzeigefeld 50 übernommen. Editierfunktionen, wie z. B. Sortieren, Suchen, Löschen, Scrollen etc., können im Anzeigefeld 50 auf die Felder und deren Inhalte angewendet werden. Eine Teletextseite kann dann durch Markierung einer Teletextseitennummer und Bestätigung durch Tasteneingabe angezeigt werden.

## Patentansprüche

1. Verfahren zur Auswahl und Abspeicherung von bevorzugten Teletextseitennummern, bei welchem eine Anzahl von individuell bestimmbaren Teletextseitennummern (53) für bevorzugte Teletextseiten durch erste manuelle Steuerbefehle in einem Speicher (20) abgespeichert werden, bei welchem die bevorzugten Teletextseiten durch zweite manuell auszulösende Steuerbefehle, die die abgespeicherte(n) Teletextseitennummer(n) aus dem Speicher (20) abrufen, auf einem Bildschirm angezeigt werden, und das folgende Verfahrensschritte aufweist:
a) Aufrufen einer als bevorzugt klassifizierten Teletextseite (70)
b) Speicherung der zu dieser Teletextseite (70) gehörenden Teletextseitennummer (71) durch einmalige Tastenbetätigung in einer Liste von bevorzugten Teletextseitennummern (53),
c) Wiederholung der Schritte a) und b), sofern Teletextseitennummern (71) von mehreren bevorzugten Teletextseiten (70) abgespeichert werden sollen,
**dadurch gekennzeichnet, dass** eine optische Menüführung für die Auswahl der bevorzugten Teletextseitennummern (71) und/oder Teletextseiten (70) vorgesehen ist, wobei in einem Anzeigefeld (50) bevorzugte Teletextseitennummem (53) und zugehörige Zusatzinformationen angezeigt werden, und dass die Zusatzinformationen (54) durch Markierung einer in ihrer Zeichenlänge vorgegebenen Zeichenkette auf der aktuell angezeigten Teletextseite (70) in das Anzeigefeld (50) übernommen werden.

2. Verfahren nach Anspruch 1,
**dadurch gekennzeichnet, dass** zu jeder Tetetextseitennummer (71) die zugehörende, aktuelle Teletextseite (70) gespeichert wird.

3. Verfahren nach Anspruch 1 oder 2,
**dadurch gekennzeichnet, dass** das Anzeigefeld (50) für die bevorzugten Teletextseitennummern (71) auf einem Bildschirm über einer darzustellenden Teletextseite (70) einblendbar ist, wobei zumindest die Kopfzeile (72) der augenblicklich dargestellten Teletextseite (70) nicht vom Anzeigefeld (50) überdeckt ist, und dass durch Tastenbetätigung die Teletextseitennummer (71) dieser aktuell dargestellten Teletextseite (70) in das Anzeigefeld (50) übernommen wird.

4. Verfahren nach einem der Ansprüche 1 bis 3,
**dadurch gekennzeichnet, dass** durch eine Fernbedienung ein Cursor (60) im Anzeigefeld (50) auf eine von mehreren dargestellten Teletextseitennummern (53) verfahrbar ist und durch Tastenbetätigung die zu der vom Cursor (60) markierten Seitennummer (53) gehörende Teletextseite nachfolgend am Bildschirm angezeigt wird.

5. Verfahren nach einem der Ansprüche 1 bis 4,
**dadurch gekennzeichnet, dass** das Anzeigefeld (50) durch Editierfunktionen veränderbar ist.

6. Vorrichtung zur Durchführung des Verfahrens nach einem der Ansprüche 1 bis 5 mit einem einen Teletextdecoder (10) aufweisenden Videogerät,
**dadurch gekennzeichnet, dass** der Teletextdecoder (10) einen nichtflüchtigen Speicher (20) aufweist, in welchem die zu den bevorzugten Teletextseiten gehörenden Teletextseitennummem (53) und Zusatzinformationen in Form von in ihrer Zeichenlänge vorgegebenen Zeichenketten speicherbar sind.

7. Vorrichtung nach Anspruch 6,
**dadurch gekennzeichnet, dass** das Videogerät ein Fernsehempfänger oder Videorecorder ist.

## Claims

1. A method for selecting and storing preferred teletext page numbers, with which a number of individually determinable teletext page numbers (53) for preferred teletext pages are stored by first manual control commands in a memory (20), with which the preferred teletext pages are displayed on a TV screen by second control commands to be triggered manually, which fetch the memorised teletext page number(s) from the memory (20), and which comprises the following process steps:
a) fetching a teletext page (70) classified as preferred
b) storing the teletext page number (71) belonging to this teletext page (70) by a single key actuation in a list of preferred teletext page numbers (53),
c) repeating the steps a) and b), provided that teletext page numbers (71) of several preferred teletext pages (70) are to be stored,
**characterised in that** an optical menu mode is provided for the selection of the preferred teletext page numbers (71) and/or teletext pages (70), with preferred teletext page numbers (53) and associated additional information being displayed in a display field (50), and **in that** the additional items of information (54) are imported into the display field (50) by marking a character string having a predetermined character length on the currently displayed teletext page (70).

2. A method according to claim 1
**characterised in that** the associated, current teletext page (70) is stored for each teletext page number (71).

3. A method according to claim 1 or 2,
**characterised in that** the display field (50) for the preferred teletext page numbers (71) on a TV screen can be overlaid over a teletext page (70) to be represented, whereby at least the header line (72) of the momentarily represented teletext page (70) is not covered by the display field (50),
and **in that** the teletext page number (71) of this currently represented teletext page (70) is imported into the display field (50) by key actuation.

4. A method according to one of Claims 1 to 3,
**characterised in** tat by a remote control a cursor (60) in the display field (50) can be moved to one of several represented teletext page numbers (53) and by key actuation the teletext page belonging to the page number (53) marked by the cursor (60) is subsequently displayed on the TV screen.

5. A method according to one of Claims 1 to 4,
**characterised in that** the display field (50) can be changed by editing functions.

6. A device for performing the method according to one of Claims 1 to 5 with a video appliance comprising a teletext decoder,
**characterised in that** the teletext decoder (10) comprises a non-volatile memory (20), in which the teletext page numbers (53) belonging to the preferred teletext pages and additional items of information can be stored in the form of character strings having a predetermined character length.

7. A device according to claim 6,
**characterised in that** the video appliance is a television receiver or video recorder.

## Revendications

1. Procédé de sélection et d'enregistrement de numéros de pages de télétexte favorites, selon lequel on enregistre un certain nombre de numéros de pages de télétexte (53) déterminé de manière individuelle pour des pages de télétexte favorites par un premier ordre de commande manuelle dans une mémoire (20),
selon lequel on appelle les pages de télétexte préférentielles par des seconds ordres de commande à déclenchement manuel qui appellent le ou les numéros de pages de télétexte enregistrés dans la mémoire (20) pour les afficher sur un écran, et qui comprend les étapes suivantes :
a) on appelle une page de télétexte (70) classée comme page préférentielle,
b) on mémorise le numéro de page de télétexte (71) correspondant à cette page de télétexte (70) par un actionnement de touche dans une liste de numéros de pages de télétexte favorites (53),
c) on répète les étapes a) et b) dans la mesure où il faut enregistrer des numéros de pages
de télétexte (71) de plusieurs pages de télétexte favorites (70),
**caractérisé en ce qu'**
il est prévu un menu optique pour sélectionner les numéros de pages de télétexte favorites (71) et/ou les pages de télétexte (70), et un champ d'affichage (50) affiche les numéros de pages de télétexte favorites (53) et des informations complémentaires correspondantes
et **en ce qu'**
on transfère les informations complémentaires (54) par le marquage d'une chaîne de signes de longueur de signes prédéterminée sur la page de télétexte (70) affichée actuellement dans le champ d'affichage (50).

2. Procédé selon la revendication 1,
**caractérisé en ce qu'**
on enregistre la page de télétexte actuelle (70) correspondant à chaque numéro de page de télétexte (71).

3. Procédé selon les revendications 1 ou 2,
**caractérisé en ce qu'**
on incruste le champ d'affichage (50) pour les numéros des pages de télétexte favorites (71) sur un écran par une page de télétexte (70) à représenter et au moins la ligne d'en tête (72) de la page de télétexte (70) affichée à l'instant, n'est pas couverte par le champ d'affichage (50), et par l'actionnement d'une touche, on transfère le numéro de page de télétexte (71) de la page de télétexte (70) actuellement affichée dans le champ d'affichage (50).

4. Procédé selon l'une des revendications 1 à 3,
**caractérisé en ce que**
par télécommande, on déplace un curseur (60) dans le champ d'affichage (50) sur l'un de plusieurs numéros de pages de télétexte représentés (53) et par l'actionnement d'une touche, on affiche sur l'écran la page de télétexte suivant le numéro de page (53) marqué par le curseur (60).

5. Procédé selon l'une des revendications 1 à 4,
**caractérisé en ce qu'**
on modifie le champ d'affichage (50) par des fonctions d'édition.

6. Dispositif pour la mise en oeuvre du procédé selon l'une des revendications 1 à 5, avec un appareil vidéo comportant un décodeur de télétexte (10),
**caractérisé en ce que**
le décodeur de télétexte (10) comporte une mémoire non volatile (20) dans laquelle sont enregistrés les numéros de pages de télétexte (53) correspondant aux pages de télétexte favorites et les informations supplémentaires sous la forme de chaîne de signes de longueur de signes prédéterminée.

7. Dispositif selon la revendication 6,
**caractérisé en ce que**
l'appareil vidéo est un téléviseur ou un appareil d'enregistrement vidéo.
